# EUROPÄISCHE PATENTSCHRIFT

(11) **EP 0 812 349 B1**
(45) Veröffentlichungstag und Bekanntmachung des Hinweises auf die Patenterteilung: **08.09.1999**
(21) Anmeldenummer: 95912180.7
(22) Anmeldetag: 01.03.1995
(51) Int. Cl.: C12G 3/02, C12G 3/00

(54) **HEFE-FRISCHZELLEN-ENZYM-GETRÄNK**
DRINK CONTAINING LIVING YEAST CELLS AND ENZYMES
BOISSON CONTENANT DES CELLULES FRAICHES ET DES ENZYMES DE LEVURE

(43) Veröffentlichungstag der Anmeldung: 17.12.1997
(73) Patentinhaber: Osberger, Waltraud, 1190 Wien 19 (AT)
(72) Erfinder: Osberger, Helmut, sen., A - 3491 Strass b. Krems (AT); Osberger, Helmut, jr., A - 3491 Strass (AT)
(74) Vertreter: Thiel, Christian, Dr. Dipl.-Chem.
(86) Internationale Anmeldenummer: EP9500749
(87) Internationale Veröffentlichungsnummer: WO9627001

(56) Entgegenhaltungen:
- EP-A- 0 323 283
- DE-A- 3 536 875
- GB-A- 2 154 120
- PATENT ABSTRACTS OF JAPAN Bd. 009, Nr. 001 (C-259)[1724] 05 Januar 1985 & JP,A,59 154 979 (SUNTORY KK) 04 September 1984
- PATENT ABSTRACTS OF JAPAN Bd. 013, Nr. 278 (C-611)[3626] 26 Juni 1989 & JP,A,01 074 975 (YAMANASHI YAKUKEN KK) 20 M{rz 1989
- PATENT ABSTRACTS OF JAPAN Bd. 16, Nr. 66 (C-912)[5109] 19 Februar 1992 & JP,A,03 262 472 (CALPIS FOOD IND. CO. LTD: THE) 22 November 1991

## Beschreibung

Die Erfindung betrifft eine Mischung zur Herstellung eines Hefe-Frischzellen-Getränks und deren Verwendung.

Zur Förderung und Erhaltung der Gesundheit und Vitalität benötigt der menschliche Organismus zahlreiche Wirkstoffe, die ihm zugeführt werden müssen. Zu nennen sind hier vor allem Mineralstoffe und Vitamine, die entweder direkt ihre Wirkung entfalten oder vom Körper in die benötigten Stoffe umgebaut werden. Für den körpereigenen Stoffwechsel spielen Fermente und Cofermente eine entscheidende Rolle. Cofermente sind häufig Vitaminabkömmlinge, woran sich auch die Bedeutung einer vitaminreichen Ernährung für den körpereigenen Stoffwechsel zeigt.

Es hat sich ferner herausgestellt, daß Vitamine und Enzyme eine wichtige Rolle als Antioxidantien besitzen, die unerwünschten Oxidationsprozessen im Körper entgegenwirken und deren nachteilige Folgen zumindest lindern können.

Zur Förderung und Erhaltung der Gesundheit sind Multivitamin-Fruchtsaftgetränke bekannt, die bereits im Herstellerbetrieb mit Vitaminen angereichert werden. Die Vorteile derartiger Getränke sind unbestritten, jedoch ergibt sich bis zum Gebrauch insbesondere nach erstmaligem Öffnen der Packung ein rascher Abbau des Vitamingehalts, der den Wirkungsgrad derartiger Getränke stark verringern kann. Im übrigen hat auch die zumeist industrielle Fertigung derartiger Getränke und die Lagerung der dafür verwandten Ausgangsmaterialien bereits einen negativen Einfluß auf den Vitamingehalt.

Es hat sich ferner gezeigt, daß gerade Fruchtsaftgetränke, also beispielsweise Apfel-, Orangen- und Traubensaft, zwar ein gewisses Spektrum an Vitamin- und Mineralstoffen aufweisen, diese jedoch nicht ausreichen, den täglichen körpereigenen Bedarf umfassend zu decken. Es werden darüber hinaus zahlreiche weitere Stoffe benötigt. Solche Vitamin- und Mineralstoffe finden sich vielfach in anderen pflanzlichen Lebensmitteln des täglichen Bedarfs in unterschiedlicher Konzentration. So sind insbesondere Milch und Milchprodukte für ihren Gehalt an Calcium und Gemüsesäfte auf Basis von Möhren oder Tomaten für ihren Gehalt an Carotin bekannt. Andererseits sind derartige Säfte oder Konzentrate hinsichtlich des Wirkstoffgehalts häufig auch recht einseitig und nicht geeignet, den täglichen Vitamin- und Mineralstoffgehalt des menschlichen Körpers voll abzudecken. Eine gewisse Abhilfe schaffen hier Mischungen solcher Säfte, die aber in der Regel nicht in der Lage sind, den Bedarf des menschlichen Körpers an B-Vitamin zu decken.

Aus EP-A-0 285 676 entsprechend DE-A-35 36 875 ist ein Verfahren zur Herstellung eines Fruchtsaftgetränks bekannt, bei dem ein gegebenenfalls mit Vitaminen angereicherter Fruchtsaft mit einer auf die Flüssigkeitsmenge abgestimmten Hefemenge versetzt und eine vorgegebene Zeitspanne gären gelassen wird. Bei diesem Verfahren wird von der bekannten alkoholischen Gärung von Fruchtsäften zur Herstellung eines Hefefrischzellen enthaltenden Getränks Gebrauch gemacht.

Weitere derartige Verfahren zur Herstellung alkoholhaltiger Getränke sind aus DE-U-81 04 654 und DE-A-30 43 282 bekannt. In DE-A-25 15 360 wird ein instantlösliches Produkt, das durch gemeinsame Trocknung von vorgedicktem Fruchtsaft mit aktiver Hefe gewonnen wird, beschrieben.

GB-A-2 154 120 beschreibt ein hefehaltiges Getränk auf Basis von Fruchtsaft oder Molke. Gemäß JP-A1-74 975 wird ein Getränk durch Fermentierung von Gemüsesaft und Honig mit Hefe, Erhitzen und Abfiltrieren der Hefe erhalten.

Aufgabe der Erfindung ist die Herstellung eines vitaminreichen Getränkes welches die Spannkraft und Gesundheit des menschlichen Körpers fördert und vom Konsumenten selbst frisch und ohne besonderen Aufwand zubereitet werden kann und dabei ein weites Spektrum an für den menschlichen Körper zuträglichen Mineralstoffen und Vitaminen bereitstellt.

Diese Aufgabe wird erfindungsgemäß mit einer Mischung zur Herstellung eines Hefe-Frischzellen-Getränks aus Mehl, Gemüseprodukt oder Mischungen derselben einerseits und, einer darauf abgestimmte Hefemenge andererseits, jeweils in Trockenform gelöst.

Die Erfindung beruht auch darauf, daß der menschliche Körper, abgesehen von in Nahrungsmitteln enthaltenen Vitaminen und Mineralstoffen zur Erhaltung seiner Spannkraft und Gesundheit auch der zeitweisen Zufuhr von lebenden Zellen (Frischzellen) bedarf. Hefe (Bierhefe, Backhefe, Weinhefe) besteht bekanntlich aus mikroskopischen kleinen einzelligen Pilzen, die für zahlreiche Gärungsprozesse verantwortlich sind und sich unter für sie zuträglichen Bedingungen außerordentlich rasch durch Zellteilung vermehren. Durch Zusatz von Hefe kann ein Gärungsprozeß eingeleitet werden, bei dem auch enzymatische Wirkstoffe, darunter alle B-Vitamine, Enzyme, Spurenelemente (Mg, Fe, Cu, Co und andere), Mineralstoffe, Komplexe und Proteine in eine lösliche Form gebracht und durch die rapide Vermehrung der jungen Hefezellen stark vermehrt werden. Das heißt, nach Maßgabe der Erfindung wird durch die vorhergehende Zugabe von Hefe auch in Trockenform - nach Rückverdünnung ein Getränk zubereitet, bei dem alle enzymatischen Wirkstoffgruppen in einer löslichen Form vorliegen, so daß sich ein die Förderung der Erhaltung der Gesundheit und der Vitalität dienendes Frischgetränk ergibt, das hohe Mengen an Hefe-Frischzellen enthält. Solch ein Getränk fördert nicht nur das Wohlbefinden des Konsumenten, sondern ermöglicht zugleich dem Verdauungstrakt eine leichtere und vollständigere Sorption und eine wertvolle Anregung zur Selbstheilung organischer Schäden. Speziell für ältere Menschen mit nachlassenden Organleistungen oder bei krankheitsbedingt herabgesetzter Dauerfunktion oder in der Rekonvaleszenz scheint die Zufuhr junger, aktiver Frischzellen mit Enzymen förderlich für die Gesundheit und Aktivität.

Geschmack und Beschaffenheit des Getränks lassen sich im Rahmen der Erfindung vorteilhaft variieren, nämlich einerseits zunächst durch die Wahl der Ausgangsbasis - also eines Getränks auf Milch, Körner- oder Gemüsesaftbasis - andererseits aber auch durch die Wahl der Hefesorte und schließlich durch die Gärungsdauer, also des Grades der fermentativen Umwandlung des Ausgangsprodukts. Die Gärdauer wird vom Verbraucher bestimmt. So ist es ohne weiteres möglich, das Getränk unmittelbar nach der Zugabe der Hefemenge zu konsumieren oder kurze Zeit danach, oder aber zu einem späteren Zeitpunkt, zu dem sich die Hefefrischzellen bereits stark vermehrt haben und eine mehr oder weniger starke fermentative Umwandlung des Ausgangsprodukts unter dem Einfluß der Hefefrischzellen stattgefunden hat. Der Alkoholgehalt in dem erfindungsgemäßen Getränk ist dabei vom Zuckergehalt des Ausgangsgetränks und der Angärdauer abhängig, wobei bei zuckerarmen Ausgangsgetränken kein hoher Alkoholgehalt erzielt werden kann. Bei zuckerarmen Gemüseprodukten ist es aber ohne weiteres möglich, durch beispielsweise Honigzusatz oder dergleichen eine Zuckerkomponente hineinzubringen, die in Abhängigkeit vom Vergärungsgrad in Alkohol umgewandelt werden kann. Insoweit kann der Konsument auch einen gewünschten Süßegrad des von ihm bereiteten Frischzellengetränks einstellen.

Ausgangsbasis für das erfindungsgemäße Hefe-Frischzellen-Getränk sind Gemüseprodukte, wie Gemüsesäfte oder -extrakte, Mehle und Extrakte von als Nahrungsmittel genutzten Samen und Körnern, wie Getreidemehl (Reis-, Mais-, Roggen-, Weizen-, Hafermehl und dgl.), Sojamehl, Buchweizenmehl, Bohnenmehl, Erbsmehl, etc. und/oder Honig, wobei auch ausdrücklich Mischungen dieser Komponenten eingesetzt werden können. In jedem Fall wird Hefe in einer auf die Menge des Basisgetränks abgestimmten Menge zugesetzt. Eine abgestimmte Menge an Hefe ist eine solche Menge, die ausreicht, das Ausgangsgetränk innerhalb von einigen Stunden, beispielsweise zwölf Stunden, in Gärung zu versetzen. Die Komponenten liegen jeweils in Trockenform vor.

Besonders bevorzugt sind Getränke auf der Basis von in Wasser eingerührtem Mehl sowie auf Basis von Trocken-Gemüsesäften, wobei reine Säfte wie auch Mischungen eingesetzt werden können. Erfindungsgemäße Getränke können zur Geschmacksverbesserung oder zur Bereitstellung einer Zuckerreserve für die Gärung Honig oder Zucker enthalten.

Besonders bevorzugt ist es, die Hefe in Form von üblicher Trockenhefe einzusetzen. Desgleichen wird das Ausgangsgetränk aus Trockenmaterialien hergestellt, beispielsweise aus Trockengemüseextrakt und dergleichen. Dieses Trockenmaterial in Pulver-, Tabletten- oder Granulatform wird dann vor dem Zugeben der Frisch- oder Trockenhefe zunächst in eine genau definierte Menge Wasser eingerührt. Bei Verwendung von Trockenmaterialien können diese die Trockenhefe in der erforderlichen Menge bereits zugemischt erhalten.

Vorteilhafterweise wird das erfindungsgemäße Getränk oder das zur Herstellung benötigte Ausgangsmaterial in Form einer Packung in Verkehr gebracht, die aus dem Ausgangsmaterial in Trockenform und Hefe besteht, wobei die Hefe bereits so portioniert ist, daß sie dem Ausgangsmaterial ohne weiteres in der richtigen Dosierung zugesetzt werden kann. Solche Packungen erhalten die Komponenten zweckmäßigerweise in Pulver-, Granulat- oder Tablettenform, die das Herstellen mit Hilfe von Leitungs- oder Mineralwasser erleichtern. Zweckmäßigerweise ist Trockenhefe dem weiteren Ausgangsmaterial für das Getränk bereits zugemischt.

Die erfindungsgemäßen Getränke können mit Vitaminen und Mineralienstoffen angereichert werden und mit Geschmacksstoffen aromatisiert werden. Als Geschmacksstoffe kommen beispielsweise in der Lebensmitteltechnik übliche Aromastoffe in Frage, beispielsweise auch Fruchtprodukte oder -extrakte.

Die Erfindung ermöglicht es dem Konsumenten in vorteilhafter Weise, ein mit Frischzellen angereichertes Getränk ohne besonderen Aufwand zuzubereiten, wobei individuelle Wünsche bei der Herstellung bzw. bei der frischen Zubereitung selbst berücksichtigt werden können.

Die Zubereitung des Getränks aus den erforderlichen Zutaten kann durch Verwendung eines Behälters für eine bestimmte Menge Flüssigkeit erleichtert werden, sowie durch Verwendung einer Packung einer auf die Flüssigkeitsmenge abgestimmten Hefemenge in Form von Trockenhefe. Dem kann eine Anweisung zur Dosierung zur Herstellung eines zumindest teilweise gärenden Getränkes beigegeben werden.

Verwendet werden kann ferner ein Mischbehälter für das aus einem festen Konzentrat und Wasser sowie der Hefe bestehende Gemenge, dessen vorbestimmter Rauminhalt die rezeptgemäße Zusammensetzung des Gemenges sicherstellt, wenn der Behälter nach Zugabe es Konzentrats beispielsweise mit Wasser aufgefüllt wird.

Mit der Erfindung ist die individuelle Aufbereitung eines schmackhaften, gesunden Getränks möglich, welches Spannkraft und Gesundheit fördert und zu jedem gewünschten Zeitpunkt frisch ohne besonderen Aufwand zubereitet werden kann.

Dem Getränk können ferner auch noch künstliche oder natürliche Vitamine, Zucker, Aromastoffe, Kräuter bzw. Kräuterextrakte, pharmazeutische Wirkstoffe und dergleichen zur Beeinflussung des Geschmacks und/oder der Gesundheit des Konsumenten beigegeben werden, wobei diese Zutaten entweder dem Ausgangsgetränk beigemischt sein können oder als separate Packung vorliegen, die vor der Hefezugabe oder unmittelbar vor dem Genuß eingerührt werden kann.

## Patentansprüche

1. Mischung zur Herstellung eines Hefe-Frischzellen-Getränks aus Mehl, Gemüseprodukt oder Mischungen derselben einerseits und, einer darauf abgestimmte Hefemenge andererseits, jeweils in Trockenform.

2. Mischung nach Anspruch 1, dadurch gekennzeichnet, daß sie die Bestandteile als Trockenpulver enthält.

3. Mischung nach Anspruch 1 in Tablettenform oder als Granulat.

4. Mischung nach einem der vorstehenden Ansprüche, dadurch gekennzeichnet, daß sie Zucker oder Honig enthält.

5. Mischung nach einem der vorstehenden Ansprüche, dadurch gekennzeichnet, daß sie mit Vitaminen und/oder Mineralien angereichert ist.

6. Mischung nach einem der vorstehenden Ansprüche, dadurch gekennzeichnet, daß sie zusätzlich mit Geschmacksstoffen versetzt ist.

7. Mischung nach einem der vorstehenden Ansprüche aus Sojamehl und Hefepulver.

8. Packung, enthaltend eine Mischung nach einem der vorstehenden Ansprüche.

9. Verwendung einer Mischung oder Packung nach einem der vorstehenden Ansprüche zur Herstellung eines Hefe-Frischzellen-Getränks durch Einrühren der Bestandteile in eine definierte Menge Wasser und Gären lassen der so erhaltenden Mischung über eine gewünschte Zeitspanne.

## Claims

1. A mixture to prepare a yeast-fresh cell beverage containing, on the one hand, a flour, vegetable products or mixtures of such and, on the other hand, a quantity of yeast proportioned for such mixture, both in dry form.

2. A mixture in accordance with claim 1, characterized by the fact that it contains the ingredients in the form of a dry powder.

3. A mixture in accordance with claim 1, in the form of tablets or granules.

4. A mixture in accordance with any of the foregoing claims, characterized by the fact that it contains sugar or honey.

5. A mixture in accordance with any of the foregoing claims, characterized by the fact that it is enriched with vitamins and/or mineral aggregates.

6. A mixture in accordance with any of the foregoing claims, characterized by the fact that additional flavoring agents are added to it.

7. A mixture in accordance with any of the foregoing claims, made out of soy flour and powdered yeast.

8. A packaging that contains a mixture in accordance with any of the foregoing claims.

9. The use of a mixture or packaging in accordance with any of the foregoing claims for the preparation of a yeast-fresh cell beverage by mixing the ingredients with a specified amount of water and to let the thus obtained mixture ferment during a predetermined period of time.

## Revendications

1. Mélange destiné à la fabrication d'une boisson à base de levure et de cellules fraîches, fait d'une farine, d'un produit à base de légumes ou d'un mélange des deux d'une part, et d'une quantité adaptée de levure d'autre part, tous sous forme séchée.

2. Mélange selon la revendication 1, caractérisée par le fait que ses composants sont contenus sous forme de poudre sèche.

3. Mélange selon la revendication 1 sous forme de comprimés ou de granulés.

4. Mélange selon l'une des revendications précédentes, caractérisé par le fait qu'il contient du sucre ou du miel.

5. Mélange selon l'une des revendications précédentes, caractérisé par l'addition de vitamines et/ou de sels minéraux.

6. Mélange selon une des revendications précédentes, caractérisé par l'addition de substances gustatives.

7. Mélange selon l'une des revendications précédentes, fait de farine de soja et de poudre de levure.

8. Sachet contenant un mélange selon l'une des revendications précédentes.

9. Utilisation d'un mélange ou d'un sachet selon l'une des revendications précédentes, destinés à fabriquer une boisson à base de levure et de cellules fraîches en délayant les composants dans une quantité définie d'eau et en faisant fermenter le mélange ainsi obtenu pendant le temps souhaité.
